# EUROPEAN PATENT APPLICATION

(11) **EP 1 320 002 A2**
(43) Date of publication of application: **18.06.2003**
(21) Application number: 02027681.2
(22) Date of filing: 12.12.2002
(51) Int. Cl.: G05B 19/4097

(54) **Design support apparatus and method**

(30) Priority: 12.12.2001 JP 2001378765
(71) Applicant: TOYOTA JIDOSHA KABUSHIKI KAISHA, Aichi-ken 471-8571 (JP)
(72) Inventor: Hirano, Satoru, Toyota-shi, Aichi-ken, 471-8571 (JP); Sakane, Hideki, Toyota-shi, Aichi-ken, 471-8571 (JP)
(74) Representative: Winter, Brandl, Fürniss, Hübner, Röss, Kaiser, Polte Partnerschaft

(57) **Abstract**

A system for supporting an overall product design process including design of machining processes. Machined portion models 200-1, each including solid shape and/or machining attribute data of a machined portion defined in the machined portion model, are prepared on a machining operation basis and stored in a library. The library is provided as a standard machined portion library 20. A design engineer designates the machined portion models 200-1 to be applied to a product model 300, which is a solid model displayed on a CAD apparatus, and specifies application positions 302 and application directions 302 thereof. Based on this designation, the CAD apparatus finds a product model 320 representing a product shape formed after the machining operations, each corresponding to the selected machined portion models 200-1 are completed. By sequentially applying the machined portion models to a blank material model of a blank material of the product, the product model 320 is generated. Because the generated product model 320 contains 3-D solid data and machining attribute data associated with each of the machined portions, the resulting data is useful for designing machining processes.

## Description

### BACKGROUND OF THE INVENTION

### Field of the Invention

The present invention relates to a design support apparatus for assisting design of products and product components or parts, which are hereafter collectively referred to simply as products.

### Description of the Related Art

In the development of various products, including machined products, design related to the production of the products is required in addition to design of the shape, form, and structure of the product itself (hereafter referred to as product design). In order to design an engine for a motor vehicle, for example, metal dies, such as molds used for producing a blank material (referred to as die design) and for the flow of cutting or other machining processes (referred to as process design), must be designed before production can begin.

Activities of the above-described product design, die design, and machining process design each require their own respective expert knowledge and are each therefore usually performed by specialized design teams. Conventionally, a product design team designs a product geometry and then a die design team and a process design team begin their respective design activities based on the designed product geometry.

Design support systems such as a CAD (computer-aided design) system using a computer are widely utilized in recent years. For product design and die design, for example, an attempt to increase the efficiency of design activities has been made using a 3-D CAD system.

Even though each of the design teams makes an effort to improve their efficiency through the use of a CAD system, the effect on the overall time required for design is limited because the results of product design must be available before design and process design can begin. Then, it is not uncommon for the initial product design to run into difficulty in terms of manufacturing engineering, which in turn often requires redesign of the product. Although when the changes are minor, the result of product design may be modified by the die design team or process design team, in conventional design it is not uncommon for the product design team to be pressed into extensively modifying their original product design. Whenever this is required, significant, and sometimes enormous, labor and time are necessary. While the 3-D CAD system facilitates design of product shapes, no conventional system has a function of incorporating information on machining process during the product design stage. Accordingly, the machining process are now commonly designed on the basis of drawings printed on paper. Paper drawings generate difficulties in terms of storing and reusing the design information.

### SUMMARY OF THE INVENTION

The present invention, which was conceived in view of the aforesaid problems, aims to provide a design support apparatus capable of improving the efficiency of design in both the product shape and machining processes.

In order to achieve the above object, a design support apparatus according to the present invention comprises a machined portion library in which machined portion models, each including shape data and machining attribute data regarding a machined portion defined in the machined portion model, are stored, and a model manager which configures a product model from a combination of a blank material model representing a blank material of the product and one or more machined portion models registered in said machined portion library.

In one aspect of the present invention, the design support apparatus further comprises a user interface for providing a user with the blank material model or the product model serving as an object to be machined, accepting a selection of the machined portion models corresponding to machining operation to be applied to the object to be machined from the machined portion library, and receiving input of placement data on the selected machined portion model. According to this aspect, the model manager responds to data input through said user interface by updating the blank material model or the product model, which is the object to be machined, to a product model in a state wherein the machining operation corresponding to the selected machined portion model has been applied based on the placement data.

In another aspect of the present invention, the shape data concerning the blank material model and the machined portion models is represented by 3-D solid models, and geometry of the product model is generated by a set operation of the solid models of the blank material model and the selected machined portion models.

In another aspect of the present invention, the machined portion model includes a wire model of a characteristic cross-sectional profile of the shape data of the associated machined portion.

In another aspect of the present invention, each of the machined portion models includes wire model data defining a surface formed at the completion of machining operation applied to the associated machined portion.

In another aspect of the present invention, each of the machined portion models further includes design requirement data regarding the associated machined portion.

In another aspect of the present invention, the design support apparatus further comprises machining attribute provision means for providing the user with machining attribute data on each of the machined portion models contained in the product model.

In another aspect of the present invention, each of the machined portion models is configured by combining one or more unit process models, each indicating a unit machined portion machined by a single tool.

Each of the above unit process models includes shape data and machining attribute data on the unit machined portion.

In still another aspect of the present invention, the design support apparatus further comprises means for classifying the unit process models contained in the product model according to tool used for machining and machining direction to obtain the machining sequence of the unit process models based on the classified result.

A design support apparatus according to the present invention comprises a tool library in which drilling tools are registered with attribute data thereof including shape data on the drilling tools, input means receiving designation of selecting drilling tools from the tool library and input of data on the machining direction and machining depth processed by the selected drilling tool, and a modeler which generates a model representing the geometry drilled by the selected drilling tool according to the input to the input means and shape data of the selected drilling tool.

In an aspect of the present invention, the design support apparatus further comprises a drilled portion model generator which produces drilled portion models, each of which indicates a single drilled portion, by combining a plurality of models created by the modeler according to the order in which operations input into the input means is performed.

In another aspect of the present invention, the design support apparatus further comprises guide display means which receives input of data on a cross-sectional profile of the drilled portion and displays the input cross-sectional profile as a guide line for the input to the input means.

In still another aspect of the present invention, the design support apparatus further comprises a checker for checking whether or not the generated drilled portion models are consistent with the cross-sectional profile, and then providing the checked result.

In another aspect of the present invention, the design support apparatus further comprises means for incorporating into the machining attribute data on the model generated by the modeler the predetermined attribute data registered in the tool library and associated with the drilling tool selected by the input means.

A design support apparatus according to the present invention comprises a tool database in which attribute data regarding plane machining tools is registered, means for receiving input of a guide line defining a plane position at the completion of machining, input means for inputting designation of selecting a plane machining tool from the tool database and specifying a machining depth processed by the selected plane machining tool as an offset amount relative to the guide line, a model generator for producing unit process models, each representing a machining geometry formed by the plane machining tool according to the input into the input means, and plane machined portion model generator for producing plane machined portion models, each defining a plane machined portion by combining a plurality of the unit process models generated by the model generator according to the order in which the input to the input means is performed.

A design support method according to the present invention assists computer aided design (CAD) of product shapes and machining processes. The design support method comprises the steps of providing a user with a model representing an object to be machined, receiving a designation of a selection of a machined portion model representing a machining operation to be applied to the object to be machined from a machined portion library in which machined portion models, each of said machined portion models including shape data and machining attribute data regarding the associated machined portion are registered, receiving input of placement data for placing the selected machined portion model on the object to be machined, and generating a model representing the object to be machined in a state wherein machining operation corresponding to the selected machined portion model is applied based on the selected machined portion model and the placement data thereof, and the model of the object to be machined.

The present invention further provides a program which forces a computer to execute the steps of providing a user with a model representing an object to be machined, receiving designation of selecting a machined portion model representing machining operation to be applied to the object to be machined from a machined portion library in which machined portion models, each including shape data and machining attribute data on a machined portion are registered from the user, receiving input of placement data for placing the selected machined portion model on the object to be machined from the user, and generating a model representing the object to be machined in a state wherein a machining operation corresponding to the machined portion model is applied based on the selected machined portion model and the placement data thereof, and the object to be machined.

### BRIEF DESCRIPTION OF THE DRAWINGS

Fig. 1 shows an example of an overall configuration of a design support system according to the present invention;
Fig. 2 shows an example of the contents of data on a drilled portion model;
Fig. 3 shows an example of model identification data;
Figs. 4A and 4B are drawings for explaining machined portion shape data and design requirement data on a drilled portion;
Figs. 5A and 5B are drawings for explaining a unit process model and machining attribute data on the drilled portion;
Fig. 6 shows an example of data regarding a plane machined portion model;
Figs. 7A and 7B are drawings for explaining machined portion shape data and design requirement data on a plane machined portion;
Figs. 8A and 8B are drawings for explaining a unit process model and machining attribute data regarding the plane machined portion;
Fig. 9 is a drawing for explaining design activities for positioning the drilled portion on a product model;
Fig. 10 is a drawing for explaining design activities for positioning the plane machined portion on a product model;
Figs. 11 is a drawing for explaining a creation scheme for drilled portion models; and
Figs. 12 is a drawing for explaining a creation scheme for plane machined portion models.

### DESCRIPTION OF THE PREFERRED EMBODIMENT

Referring now in detail to the drawings, a preferred embodiment of the present invention will be described below.

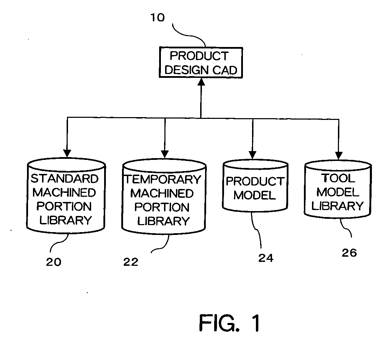

Fig. 1 shows an example of an overall configuration of a design support system according to the present invention. The design support system serves the purpose of achieving concurrent processing of design activities for creating product shape and generating machining process information for actually manufacturing the product shape.

A CAD apparatus 10 shown in the system of Fig. 1 is configured by adding a function of handling machined portion models to a conventional 3-D solid modeler. The machined portion model is a model representing a machining operation for manufacturing an object and contains, broadly speaking, data regarding a machined shape (i.e. the geometrical shape resulting from a machining operation) and various machining attribute data which defines the machining operation. The details of the machined portion model will be described below. The CAD apparatus 10 has the function of representing complicated three-dimensional geometries by set operations for combining 3-D solid shapes , as in the case of conventional solid modelers, as well as having a capability of handling machined portion models containing attribute data other than shape data, such as machining attribute data.

A standard machined portion library 20 is a database in which standard machined portion models are retained. Standard machined portion models are commonly adopted as the standard in an organization, such as a corporation, in which the team making use of this design support system is located. On the other hand, a temporary machined portion library 22 is a database in which non-standard machined portion models produced using the design support system are registered.

In the system according to this embodiment, design activities basically proceed using the standard machined portion models stored in the standard machined portion library 20. However, machining operations which cannot be represented by the standard machined portion models can be represented using a machined portion model newly created and entered in the temporary machined portion library 22.

A product model 24 is a model of an object to be designed and created by the CAD apparatus 10. The product model 24 is represented by a combination of a blank material model of a 3-D solid model defining the geometry of blank material, which serves as an object to be machined, and machined portion models each defining the machining operation applied to the blank material model. This representation scheme of the product model may be likened to a process of forming the final shape of the product by applying a machining operation to a blank material manufactured by casting or forging. The product shape can be obtained by set operations which incorporate each of the solid shapes of the machined portion models applied to a blank material model into a solid shape of the blank material model. It should be noted that, because the solid geometry of the blank material model indicates a substance (material body) whereas each of the solid shapes of the machined portion models indicates the shape of portions to be removed by machining operation, the set operation to obtain the product shape is performed by subtracting the machined portion geometries from the blank material geometry.

A tool model library 26 is a database in which models of tools used for machining operation (hereafter referred to as tool models) are retained. A tool model may contain data regarding a name and geometry of a tool, data regarding the geometry of the machined portion to be machined by the tool (for example, solid shape data), data regarding dimensional tolerance and surface roughness achieved by machining operation using the tool, and machine identification data regarding a machine capable of using the tool. The tool model can be used to create machined portion models and for checking for tool interference relative to the product shape. Conversely, when design is performed using only the machined portion models in the standard machined portion library 20 (i.e. without a necessity for creation of a new machined portion model) without checking tool interference, the tool model library 26 (and the temporary machined portion library 22) is not necessary.

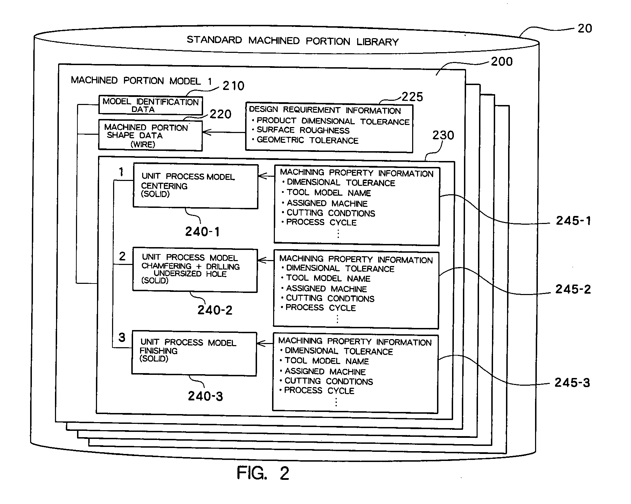

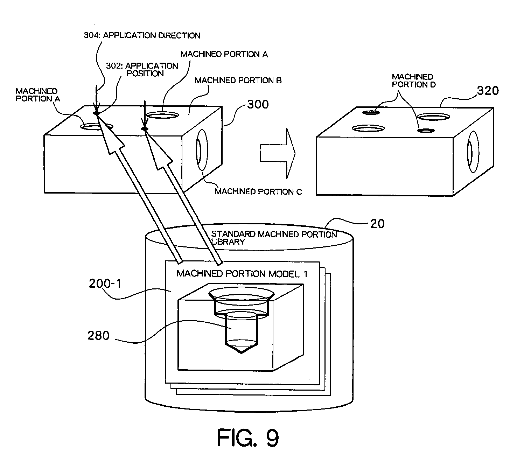

The content of data regarding the machined portion model will be described below. In Fig. 2, an example of data regarding a machined portion model 200-1 defining a drilled portion is shown. The machined portion model 200-1 represents a drilled portion 280 which is complex in shape as shown in Fig. 9. The drilled portion model 280 is formed by the three different drilling operations, which is represented by the machined portion model 200-1. The details will be described below.

As shown in Fig. 2, the machined portion model 200-1 contains model identification data 210, machined portion shape data 220, and a unit model assembly 230. Although Fig. 2 shows an example of the machined portion model stored in the standard machined portion library 20, a machined portion model stored in the temporary machined portion library 22 may have the same data structure.

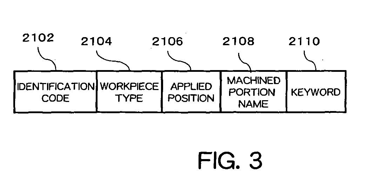

Model identification data 210 includes information used for identification and retrieval of the machined portion model 200-1. Fig. 3 shows an example of the model identification data 210. The model identification data 210 shown in Fig. 3 contains an identification code 2102, workpiece type 2104, applied position 2106, machined portion name 2108, and keyword 2110. The identification code 2102 is a code uniquely assigned to the machined portion model 200-1 and is used by the design support system to identify the machined portion model. On the other hand, the workpiece type 2104, the applied position 2106, the machined portion name 2108, and the keyword 2110 are used mainly by a user when searching for a particular machined portion model.

The workpiece type 2104 is data regarding a category of workpiece (an object to be machined). As the workpiece type 2104, for example, a designation of workpiece category such as "straight four engine block", "V-six engine block" or the like may be specified. The applied position 2106 is data regarding a location on the workpiece where the machined portion is to be applied. For example, an information item such as a position designation on the workpiece, such as, for example, upper surface, lower surface, side surface, or the like, may be assigned as the applied position 2106. The machined portion name 2108 is a designation representing the machined portion and it is preferable to use a name which implies a feature of the machined portion such as, for example, "knock hole drilling", "bank chamfering", or the like, as the machined portion name 2108. Keywords which may be used for finding the machined portion model other than the above described data is registered as the keyword 2110.

In addition to the above described items, data regarding a type of the machined portion such as, for example, the drilled portion, and the plane machined portion described in this example may be included in the model identification data 210.

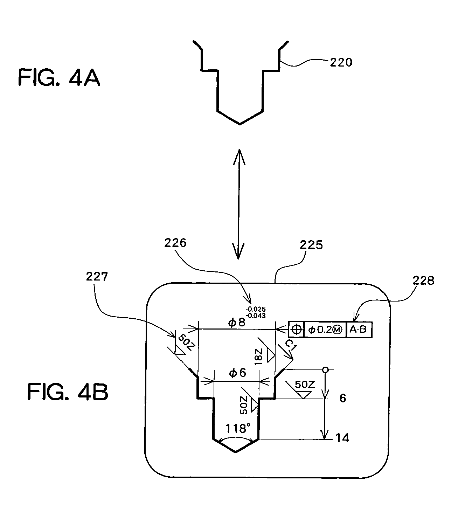

The machined portion shape data 220 is wire data describing a cross-sectional profile of the drilled portion as shown in Fig. 4A. Because the geometry of the drilled portion can be distinguished by a cross-sectional profile along a centerline of the hole, data regarding the line drawing of the cross-sectional profile (wire data) is retained as the machined portion shape data 220. The machined portion shape data 220 is provided to enable a design engineer who is accustomed to two-dimensional design drawings to easily recognize the geometry of the machined portion model. It is possible to derive such cross-sectional profile from the solid shape data contained in the unit model assembly 230, as described below. To enable quick referencing, the cross-sectional profile is preregistered as information regarding the machined portion model in this system.

The machined portion model 200-1 further contains design requirement data 225 associated with the machined portion shape data 220. The design requirement data 225 is data regarding design requirements given to the machined portion defined by the machined portion model 200-1 in terms of product design.

The design requirement data 225 includes, for example, dimensional tolerance 226, surface roughness 227, geometrical tolerance as shown in Fig. 4B where positional deviation 228 is illustrated as an example of tolerance. Further, the design requirement data 225 may include all numerical values of dimensions of the machining portion. The dimensional data is obtained from the dimensions specified during creation of the wire data 220 using the CAD apparatus and contained in the wire data 220. The design requirement data 225 is incorporated into the machined portion model 200-1 as 2-D drawing data as shown in Fig. 4B, and is displayed on the CAD apparatus 10 as required or directed. Alternatively, each item of the design requirements such as the dimensional tolerance or another item may be linked with each of the corresponding points in the wire data 220 so as to be displayed by, for example, clicking on one of the linked points on the wire data 220. In order to allow the design engineer to recognize each item of the design requirement data assigned to the machined portion model 200-1, the design requirement data 225 is in the form of displayable data. Here, it should be noted that the dimensional tolerance and other items described as the items of the design requirement data 225 in Fig. 2 are provided as examples, and a variety of other items may be included to the design requirement data 225. It is not necessary to specify all of the design requirements of every corresponding point on the machined portion, but it may be preferable to specify all or part of the items on the points required from a design viewpoint.

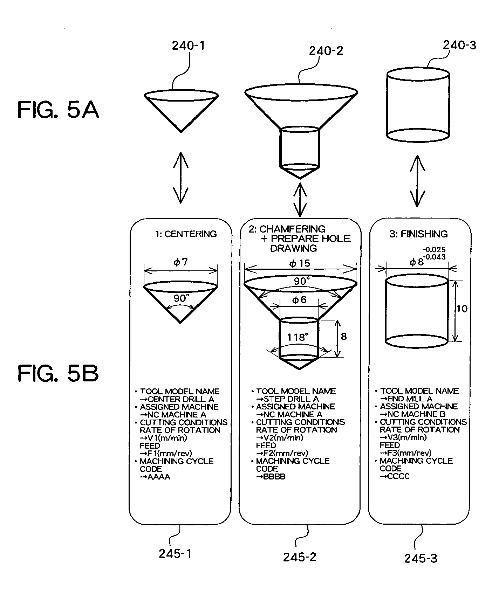

The process model assembly 230 comprises one or more unit process models 240, each representing a unit machining operation completed by a single machine using a single tool. The process model assembly 230 includes all of the unit process models 240, each representing the unit machining operations, necessary to machine the entire machined portion corresponding to the machined portion model 200-1. Each of the unit process models 240 is represented by 3-D solid data regarding the machined geometry formed by the unit machining operation. In this example, three unit machining operations of "centering", "chamfering + prepare hole drilling", and "finishing" are required to form the drilled portion 280 (refer to Fig. 9). Accordingly, the process model assembly 230 includes unit process models 240-1, 240-2, and 240-3 (see Fig. 5A for solid shapes of these models) corresponding to their respective unit machining operations. Because formation of the drilled portion 280 requires execution of the unit machining operations in the sequence of "centering", "chamfering + prepare hole drilling, and "finishing", data regarding the order of the unit process models 240-1 to 240-3 corresponding to the execution sequence is included in the process model assembly 230.

Further, the process model assembly 230 stores machining attribute data 245-1 to 245-3 concerning the unit machining operations defined by the unit process models 240-1 to 240-3. The machining attribute data 245-1 to 245-3 is associated with the unit process models 240-1 to 240-3 in the process model assembly 230, respectively. The machining attribute data 245-1 to 245-3 may includes items such as, for example, tolerance, tool model designations, assigned machines, cutting conditions, machining cycles. Referring to Fig. 5B, the details will be described below. The dimensional tolerance is that required for the unit machining operation and specified as needed. The "tool model name" is an identification name designating a tool model used for executing the unit machining operation. In this example, tool models each representing a tool for machining are stored in the tool model library 26 and data regarding each of the tools can be obtained from the tool models. Accordingly, the identification name of each of the tool models in the tool model library 26 is adopted as the tool model name in the machining attribute data 245. The "assigned machine" is identification data of a machine assigned for executing the unit machining operation. The "cutting conditions" are items specifying conditions applied when the unit machining operation is executed, and contain data regarding, for example, the number of revolutions of the tool, feed rate or the like. The "machining cycle code" is a code of machining cycle applied when the unit machining operation is executed. The machining cycle is data (rules) defining movement patterns of the tool such as, for example, "first, feeding the tool at high speed until reaching to the drilling start point, then feeding the tool at low-speed from the drilling start point to a prescribed depth, and increasing the feed rate, and then halting the feed of the tool when reaching to the depth to be machined and rotating the tool for a while" or "repeating of feeding forward and backward by a predetermined amount (pecking movement)". For a machining operation, even when the same hole is machined using the same tool, there are a variety of movement patterns of the tool and the resulting quality to be achieved can vary according to the applied movement pattern. In this embodiment, such various movement patterns of the tool (i.e. the machining cycles) are registered in advance with codes assigned to the movement patterns of the tool to allow the machining cycle used for the unit process model 240 to be specified by the code. The machining attribute data 245 may further comprise other machining attribute items such as coolant designation applied during the machining operation. The dimensions of the unit process models 240 may be included to the machining attribute data 245. Because the dimensions of the machined portions are obtained from the dimensions specified during creation of the unit process model 240 using the CAD apparatus and contained in the data regarding the unit process model 240, it is possible to derive the numerical values of the dimensions from the unit process model 240. It should be noted that with the present invention it is not necessary to specify all of the machining attribute items in the unit process model 240, and it is preferable to specify the items necessary for the unit process models 240.

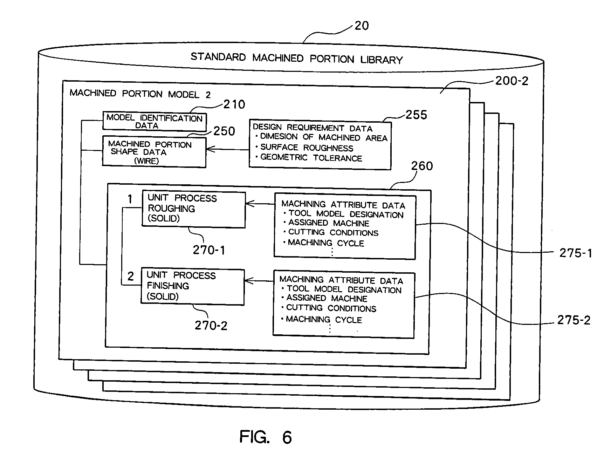

Referring now to Fig. 6, the contents of data regarding a machined portion model 200-2 of a plane machined portion will be described. The plane machined portion model 200-2 also comprises the model identification data 210, machined portion shape data 250, and a unit model assembly 260. The model identification data 210 may have a configuration similar to that of the drilled portion model 200-1.

The machined portion shape data 250 of the plane machined portion is wire data which defines a plane matching a finished surface (plane) of the product formed by the machining operation.

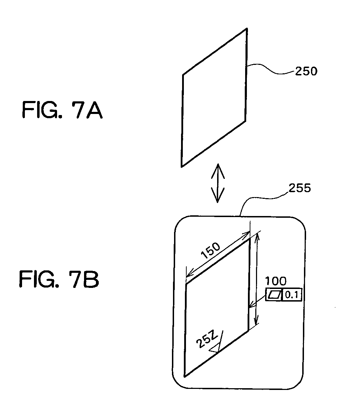

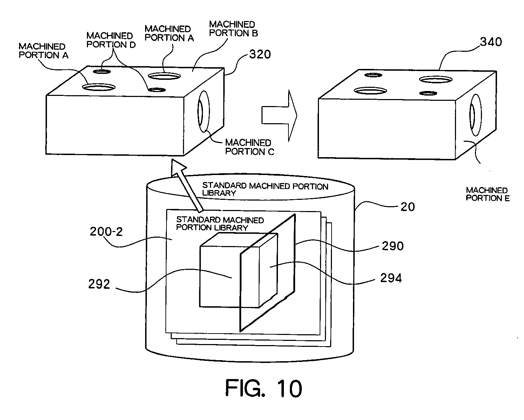

Fig. 7A shows an example of wire data. The wire data in this example describes the finished surface of the product using wire lines of a rectangle in shape which contains the finished surface. The wire data is not just a two-dimensional line drawing yet contains information on the position of the wire lines in three dimensions (for example, coordinates of vertices of the rectangle) on a datum coordinate system used at the machining operation. Accordingly, when the blank material model is placed at a predetermined reference position on the datum coordinate system, the plane defined by the wire lines becomes a plane which represents the finished surface of the product after performing the surface grinding associated with the corresponding machined portion model on the blank material model. A schematic drawing of the machined portion model 200-2 shown in Fig. 10 depicts that by machining a model 292, which is an object to be machined, to the plane defined by wire lines 290 of the machined portion shape data 250, the finished surface of the product 294 is formed.

Whereas in the drilled portion model the cross-sectional profile of the resulting shape of drilling operation is used as the machined portion shape data 220, in this example the finished surface of the product which is the resulting shape of the plane machining operation is represented by the machined portion shape data 250. Although a variety of data representations may be used to describe the finished surface (plane) of the product, wire data is used in this example because the wire data is consistent with the data representation of the machined portion shape data 220 of the drilled portion. Another reason for using the wire data is applicability of the wire lines to a reference for automatic generation of a tool path. More specifically, although the wire lines are formed in a rectangle in the example of Fig. 7, by forming the wire lines to conform to contours of the actual finished surface of the product, it becomes possible to generate the tool path in machining process according to the wire lines.

The machined portion model 200-2 retains design requirement data 255 associated with the machined portion shape data 250. The design requirement data 255 contains data on the surface roughness of the machined portion (i.e. the finished surface of the product), geometric tolerance, and dimensions of the region to be machined (see Fig. 7B). The dimensions of the region to be machined are dimensional data regarding each segment of the machined portion shape data 250 (wire lines). In the example of Fig. 7B, the flatness of the finished surface of the product is illustrated as an example of geometric tolerance.

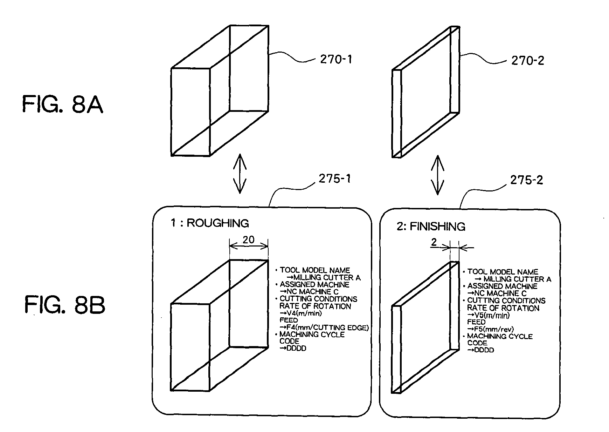

A process model assembly 260 of the plane machined portion also comprises one or more unit process models 270. The process model assembly 260 contains all of the unit process models 270, each representing the unit machining operation, necessary to machine the entire machined portion corresponding to the machined portion model 200-2. Each of the unit process models 270 is represented by 3-D solid data regarding the geometry to be machined by the unit of machining operation. In typical plane machining, a plane is machined in several steps while tools are changed, and in the final step finish cutting is executed using a combination of a machine and a tool capable of achieving the required surface roughness or accuracy. The unit model assembly 260 in this example describes procedures to form the desired finished surface of the product in a two-step sequence in which "rough" machining is executed in the first and then "finish" machining is executed. Unit process models 270-1 for "finishing" and 270-2 for "roughing" can be represented by solid shapes, each produced by using the wire lines of the machined portion shape data 250 as a bottom shape and the thickness to be removed by machining (cutting depth) as a height as shown in Fig. 8A. Alternatively, the unit process models 270 of the plane machined portion may be specified using an offset amount relative to the finished surface of the product indicated by the machined portion shape data 250 (the height from the finished surface). By subtracting a solid shape defined by the unit process model 270 from a solid model representing an object to be machined (a set subtraction), the object to be machined is represented in the state in which the unit machining operation corresponding to the unit process model 270 is completed.

The unit model assembly 260 of the plane machined portion also includes data regarding application sequence of the unit process models 270 (in other words, the order in which the unit machining operations are executed), as in the case of the unit model assembly 230 of the drilled portion.

The unit model assembly 260 also stores machining attribute data 275-1 to 275-2 concerning the unit machining operations defined by the unit process models 270-1 to 270-2. The machining attribute data 275-1 to 275-2 is associated with respective unit process models 270-1 to 270-2 in the unit model assembly 260. Like the machining attribute data 245 of the drilled portion, the machining attribute data 275-1 to 275-2 may include data regarding items such as tool model designations, assigned machines, cutting conditions, and machining cycles. Each of the items is similar to that of the drilled portion (see Fig. 8B). Values of the cutting depths (or offset amounts from the finished surface of the product) of the unit process models 270 may be incorporated into the machining attribute data 275.

Up to this point, the machined portion models have been described. In the CAD apparatus 10 according to this embodiment, the above-described machined portion models are laid out onto a solid model of the blank material to generate a product model. Here, it should be noted that a model generated by laying out one or more machined portion models on the blank material model is referred to as a product model. In other words, the term of the product model is not limited to refer to the final model of the product and may denote intermediate models created in the course of design operation. Accordingly, the design operation by the CAD apparatus 10 may be conceived as operation of updating the product model by sequentially laying out the machined portion models onto the product model. The product model geometry is formed by incorporating each of the solid shapes of the machined portion models produced by the design operation into the solid shape of the blank material model.

As a user interface means for such design operation, the CAD apparatus 10 comprises a display screen, on which the rendered solid shape of the current product model is displayed, and input devices such as a keyboard and a pointing device. The CAD apparatus 10 provides a retrieve tool to select the machined portion models to be placed. As the retrieve tool, one that accepts designation of search conditions for the items of the model identification data 210 (see Fig. 3) and retrieves the machined portion models meeting the specified search conditions from the standard machined portion library 20 and/or the temporary machined portion library 22 may be adopted. The retrieved result may be displayed, for example, as a list of the machined portion models satisfying the specified search conditions. For example, when "straight four engine block" and "upper surface" are specified as the workpiece type and the applied position, respectively, the machined portion models registered in the libraries as "straight four engine block" on "upper surface" are extracted and listed on display. On the listing display, the workpiece types, the applied positions, and the identification data such as the machined portion name are displayed, for example, on a machined portion model basis along with the wire model of the unit process models 220 and 250. Because many design engineers distinguish a drilled portion, in particular, by its cross-sectional profile, the wire model display helps design engineers identify the desired machined portion model. Further, by additionally displaying the design requirement data 225 and 255 of the machined portion models, and the unit process models 240 and the machining attribute data 245 in the unit model assemblies 230 and 260, design engineers are provided with elements used for determining whether the machined portion model is a desired model. It is preferable to display the detailed information, such as the design requirement data and the unit model assembly, as directed by the design engineer users.

When the desired machined portion model is obtained by the retrieve tool as described above, the design engineer specifies on the display screen of the product model a location where the machined portion model is to be applied (the placement position) using a pointing device, such as a mouse or light pen. The design engineer may also specify a direction of application (placement direction), if necessary. This operation allows the design engineers to form the product model with feeling as if they are applying machining operations on an actual workpiece.

The above design operation by the CAD apparatus 10 will be described below using specific examples.

Fig. 9 is a drawing used for explaining an example of placement of the drilled portion on the product model. Referring to the example of Fig. 9, procedures for placing the drilled portion model 200-1 on a product model 300 and the result thereof are described. The product model 300 represents the product in a state in which machined portions A (drilling operation), machined portion B (plane machining operation), and machined portion C (drilling operation) are already applied. The design engineer retrieves the desired machined portion model 200-1 from the standard machined portion library 20 and/or the temporary machined portion library 22 using the above-described retrieve tool or the like, and specifies an application position 302 and an application direction 304 of the machined portion model 200-1 on the product model 300. In the example of Fig. 9, the same machined portion model 200-1 is used at two positions. After receiving these instructions, the CAD apparatus 10 executes a set operation for incorporating the solid shapes of the two placed machined portion models 200-1 into the solid shape of the product model 300 to obtain a geometry of a product model 320 updated by placing the machined portion models 200-1 (machining portion D), and then displays the resulting shape.

Referring to Fig. 10, design procedures for placement of the plane machined portion model 200-2 on the updated product model 320 after the above procedures explained in accordance with Fig. 9 are described below. In this example, the design engineer finds a desired plane machined portion model 200-2 using the retrieve tool and gives instructions for applying that model to the CAD apparatus 10. Because the plane machined portion model 200-2 contains positional data regarding the finished surface of the product in the datum coordinate system, by placing the product model 320 at the predetermined reference position in the datum coordinate system and specifying the plane machined portion model 200-2 to be applied, the application position of the specified plane machined portion model is defined. The application position need not be specifically designated. In the example of Fig. 10, the plane machining operation corresponding to the machined portion model 200-2 is applied from the right of the model in the figure to the surface where the machined portion C is formed. After the plane machining is applied, the product model 320 becomes a product model 340 having a machined portion E.

For the plane machined portion, when the size of the object to be machined is larger than the geometry formed by the wire lines of the machined portion shape data 250, it becomes impossible to properly represent the state in which the plane machining is applied to the object to be machined due to the dependence of the solid shape of the unit process model 275 on the wire lines. Further, when the tool path for machining is automatically generated relative to the wire lines, it is desirable to allow the geometry formed by the wire lines to adjust to the desired shape. It is thus preferable to employ adjustable dimensions and shape for the wire lines of the machined portion shape data 250 while the machined portion model 200-2 is being applied to the product model. In order to obtain this adjustability, the CAD apparatus 10 may store data regarding changes in dimensions and geometry of the machined portion shape data 250 (wire lines) as historical information about the applied design procedures as well as the data to identify the machined portion model. For the solid shape of the unit process model 240, in an example wherein the wire lines are referenced as the final geometry, the desired solid shape may be obtained only by changing the dimensions and geometry of the wire lines.

Each of the design procedures for application of the drilled portion and the plane machined portion, as described above, is a unit of design procedures. A design engineer may define the product model by sequentially adding the design procedures as described above starting with the blank material model.

In the above case, the product model is represented by a combination of the blank material model and the history of the design procedures applied to the blank material model. This history may have the structure in which design procedures executed by each individual design engineer are listed in the order in which the procedures are applied. Each of the design procedures consists of, for example, a combination of data specifying a machined portion model and data specifying the application position and the application direction of the machined portion model (data regarding the application position and the application direction are not required for the plane machined portion). The CAD apparatus 10 can compute the solid shape of the product model by applying the procedures stored in the above history onto the blank material model.

Up to this point, design schemes for product models according to this embodiment have been described. Next, an example of a creation scheme for machined portion models used in the design scheme will be described below. By incorporating a creation support tool which implements the following creation scheme for machined portion models in the CAD apparatus 10 or in another computer accessibly connected to the standard machined portion library 20 or the temporary machined portion library 22, users can create the machined portion models using the creation support tool as needed.

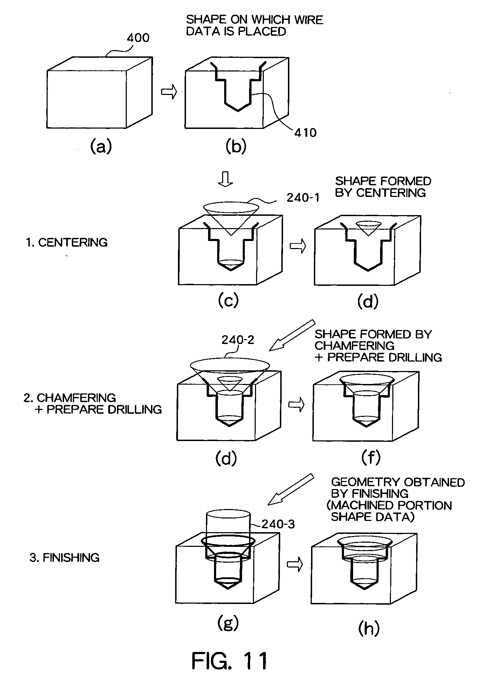

Fig. 11 is a drawing used for explaining an example of a creation scheme for drilled portion models. According to the schema, the support tool for creating machined portion models displays a blank material model 400 for defining a machined portion model as shown in (a). A user places wire data 410 representing a cross-sectional profile of the drilled portion on the target position to be drilled on the display as shown in (b). The wire data 410 is created by a user, stored as the machined portion shape data 220 of the machined portion model 200-1, and displayed as a guide line (reference geometry) for placing the unit process models 240. Referring to the guiding line, the user sequentially places the unit process models 240, each representing the unit machining operation to form the drilled portion. Further, when the wire data 410 is placed, the support tool receives input of, for example, "dimensional tolerance of the product" from the user and registers the input data in the design requirement data 225 of the corresponding machined portion model 200-1.

For placement of the unit process models, first the "centering" model 240-1 used as the datum for drilling is placed as shown in (c). After the placement of the "centering" model 240-1, the support tool executes a consistency check determining whether or not the centerline of the placed "centering" model 240-1 matches with the centerline of the wire data 410 and then notifies the user whether or not the centerlines match. This notification helps the user properly place the "centering" model 240-1 aligning with the wire data 410. According to the placement result, the support tool finds common segments between the solid shape of the "centering" model 240-1 and the solid shape of the blank material model 400 as the geometry after center drilling (see (d)).

In the above procedure, the "centering" model 240-1 itself is identified responding to a user designation of the tool used for "centering". Data regarding the tools is registered in the tool model library 26. When the user selects a desired tool from the tool model library 26, a solid conical shape which represents the geometry to be machined by centering is determined according to the geometry of the specified tool. The support tool enters the geometry to be machined (solid shape) corresponding to the specified tool model into the unit model assembly 230 as the first unit process model 240-1, and retrieves and then stores all of the machining attribute data 245-1 in conjunction with storing data about relative position of the unit process model (solid shape) 240-1 in reference to the blank material model 400. The "tool model designation" and "assigned machine" of the machining attribute data 245-1 may be obtained from data about the tool model specified by the user. For the "dimension tolerance", "cutting conditions", or "machining cycle", the support tool prompts the user to enter the items and registers the input data to the machining attribute data 245-1. As the "cutting conditions", "machining cycle", or the like, the user inputs data determined as suitable by past experiment, prototype manufacturing, and/or knowledge of skilled engineers. Tolerance data need not be input by the user because there are opportunities for the data to be obtained from the tool or the cutting conditions.

In the next step, the user places a model 240-2 for "chamfering + prepare hole drilling" aligning with the wire data 410 as shown in (c). Then, the support tool executes the consistency check for determining whether the cross-sectional profile of the placed model 240-2 matches the wire data 410 and notifies the user as to whether or not they match. This notification helps the user properly place the model 240-2 for "chamfering + prepare hole drilling" aligning with the wire data 410. (f) shows the common segments between the placed models 240-1 and 240-2 and the blank material model 400.

In this step, similarly to the "centering" model 240-1, the support tool also finds a solid shape of the model 240-2 for "chamfering + prepare hole drilling" according to the tool model selected by the user and registers the found solid shape and the relative position thereof in reference to the blank material model 400 in the unit model assembly 230 as the second unit process model 240-2 in conjunction with retrieving the items of machining attribute and storing the retrieved items in the machining attribute data 245-2.

Next, the user places a "finishing" model 240-3 aligning with the wire data 410 as shown in (g). At the time of this placement, the support tool helps the user properly place the model 240-3 aligning with the wire data 410 by executing consistency check for determining whether the cross-sectional profile of the model 240-3 matches the wire data 410 and then notifying the user of the checked result. (h) shows the geometry of common segments between the placed models 240-1, 240-2, and 240-3 and the blank material model of the wire data 400. As with the "centering" model 240-1, the support tool also finds a solid model of the "finishing" model 240-3 from the tool model selected by the user and then registers data regarding the relative position of the solid model to the blank material model 400 in the unit model assembly 230 as the third unit process model 240-3 in conjunction with obtaining of data regarding each item of machining attributes to enter the obtained data to the machining attribute data 245-3.

Further, the support tool assigns a unique identification code 2102 to the input unit process model 200-1, accepts specification of the workpiece type 2104 being an application target of the model and other input from the user, and then registers the accepted data in the model identification data 210 (refer to Fig. 3).

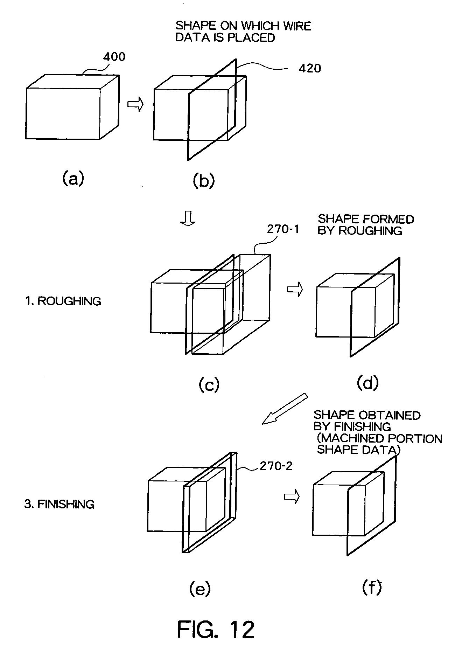

The above-described steps constitute the creation scheme for drilled portion models. Referring now to Fig. 12, an example of a creation scheme for plane machined portion models will be described below.

According to this creation scheme, the support tool displays the blank material model 400 for defining a machined portion model on screen as shown in (a). On the displayed model, the user places the wire data 420 representing the finished surface of the product at a position where the finished surface of the product is machined by the plane machining as shown in (b). The placed wire data 420 and placement position data thereof are stored as the machined portion shape data 250 of the machined portion model 200-2 and displayed as a guide line (reference geometry) for placing the unit process model 270. The support tool receives input of data such as "dimensional tolerance of the product" and associates the input data with the wire data 420 to register the input data in the design requirement data 255 of the machined portion model 200-2.

When the unit process model is placed, as shown in (c), a "rough" machining model of the unit process model 270-1 is first positioned. At the time of this placement, the user specifies a tool and a placement position of the unit process model 270-1. For the plane machined portion model, the placement position of the unit process model 270-1 may be specified using the offset amount relative to the wire data 420. More specifically, by specifying machining start and end heights relative to the finished surface of the product defined by the wire data 420, a solid shape for the model 270-1 of which the bottom surface is taken from the geometry of the wire data 420 is determined. (d) shows a resulting shape obtained after a region of the "rough" machining model 270-1 is machined on the blank material model 400. The support tool registers the data regarding the solid geometry of the resulting shape in the unit model assembly 260 as the first unit process model 270-1 of the plane machined portion model 200-2 in conjunction with obtaining each item of the machining attribute data 275-1 to store them. The machining attribute data 275-1 can be registered as with the drilled portion.

Next, the user places a "finishing" model 270-2 as shown in (e). In this placement step, the user specifies the machining end height of the model 270-2, which lies at a height of zero relative to the finished surface of the product because this is the "finish" machining step. As the machining start height, a value of the former machining end height of the model 270-1 is automatically inherited by the support tool. The automatic inheritance maintains consistency between the unit process models. (f) shows a resulting shape obtained after a region of the "finishing" model 270-2 is machined. The support tool registers the resulting solid shape in the unit model assembly 260 as the second unit process model 270-2 of the plane machined portion model 200-2 in conjunction with obtaining each item of machining attribute data 275-2.

The support tool gives a unique identification code 2102 to the input unit process model 200-2, accepts specification regarding the workpiece type 2104 which is an application target of the model and others from the user, and then registers the accepted data in the model identification data 210 (refer to Fig. 3).

Up to this point, examples methods of creation of machined portion models have been described. Among the machined portion models created according to the methods, machined portion models for which the actual performance characteristics are preferable are adopted as the standard models using the design support system and retained in the standard machine portion library 20. When an adequate number of types of the machined portion models are prepared in advance, it is possible to design the product model only using the stored standard machined portion models. However, because there are occasions where only the use of the standard machined portion models cannot accommodate design operation for the product model as an actual problem, the above-described creation support tool is provided to the CAD apparatus 10 and others in this embodiment to allow creation of machined portion models required by design worksites using the creation support tool. By using the creation support tool, product design engineers and process design engineers can cooperate to create suitable machined portion models by combining their knowledge. Machined portion models created at the design worksites are stored in the temporary machined portion library 22 to facilitate reuse of the created machined portion models. The machined portion models stored in the temporary machined portion library 22 may be moved to the standard machined portion library 20 after information regarding the actual performance of the machined portion models has been accumulated.

The preferred embodiment of the present invention has been described above. According to the present embodiment, because each of the machined portion models incorporated into the product model includes the machining attribute data (or refers to the machining attribute data of the corresponding machined portion model stored in the library 20 or 22), the machining attribute data of each of the machined portion models can be obtained from the product model. In other words, because the product model created using this design support apparatus retains 3-D solid shape thereof and the machining attribute data 245, 247 of the machined portions, the process design engineers can effectively design a machining process referencing a series of the machining attribute data. For example, by providing a support tool capable of displaying geometry of the product model 24 on a screen such that the user can select the displayed machined portions using a device such as a mouse to show data about the machined portion model 200 (data such as the design requirement data 225, 255, and the unit model assembly 230, 260 (refer to Fig. 6 and others)) associated with the selected machined portion, the process design engineers can check all of the data regarding the machined portion using the support tool. Because process design engineers need not determine individual machining attribute items, working efficiency is improved.

Further according to the present invention, because the machined portion model includes data regarding machining procedures, by designing the product model using the CAD apparatus 10 according to the present embodiment, a significant portion of the design work for the machining process can be completed concurrently with finishing the design of the product model.

More specifically, because the order of the unit process models 240 and 270 (i.e. the order in which the unit machining operations are applied) is determined in each of the machined portion models 200, the order of the unit machining operations in each of the machined portion models is obtained by referencing the order of the unit process models.

Accordingly, when the two machined portions D illustrated in Fig. 9 are machined, the order is such that first the unit process model 240-1, and then the unit process model 240-2, and finally the unit process model 240-3 for the two machined portion models are machined. For the machined portion models placed in such a manner that the regions to be machined thereof do not overlap each other (for example, placed in the similar relationship between the two machined portions D depicted in Fig. 9), the application sequence of the machined portion models may be established arbitrarily in principle. Accordingly, all of the unit process models disassembled from the different machined portion models may be arranged in the overall machining order. When the overall machining order is determined, it is efficient to group the unit process models according to machine to be used, tool to be used, and direction in which machining is executed across the machine portion models and continuously process the unit process models in the same group. In such a case, the order of the groups is determined according to the application sequence of the unit process models in each of the machined portion models.

As described above, it is possible to automatically generate the machining process in considerable detail from the data contained in the product model 24 according to the present embodiment. Therefore, by incorporating a utility capable of determining the machining sequence of the unit process models associated with the machined portion models according to the above-described scheme into the CAD apparatus 10 or other computers used by the process design engineers, the design work of the process design engineers can be greatly simplified. Because the order of all the unit process models is not necessarily determined by automatic generation, the order of undetermined unit process models may be specified by receiving input about the order from the user.

The product model 24 created by the system according to the present embodiment is configured by a combination of machined portion models including a set of the unit process models 240, 270. Here, it should be noted that the unit process models are created referencing the geometry of the tools. Accordingly, the created unit process models are always manufacturable, that is, with this embodiment, there is no possibility that a designed model will require a tool which is not available.

Further, according to the present embodiment, because the model 24 includes the solid shape of the product and the tool model library 26 storing tool models is provided, it is possible to execute a tool interference check and automatically create the tool path for NC machining using the models.

The design support system described above is typically using a computer system which executes a program which provides the computer with the above capabilities.

Although drilled and plane machined portions are described as example machined portions in the above description, the machined portion is not limited to those described above and the system may be used to model other machined portions.

It will further be understood by those skilled in the art that the foregoing description of a preferred embodiment of the present invention is provided as an example only, and that various changes and modifications may be made in the invention without departing from the spirit and scope thereof.

## Claims

1. A design support apparatus comprising:
a machined portion library in which machined portion models, each including shape data and machining attribute data regarding a machined portion are registered, and
a model manager which configures a product model from a combination of a blank material model representing a blank material of the product and one or more machined portion models registered in said machined portion library.

2. The design support apparatus according to claim 1, wherein
the design support apparatus further comprises a user interface for providing a user with said blank material model or said product model serving as an object to be machined, accepting a selection of the machined portion models corresponding to machining operation to be applied to the object to be machined from said machined portion library, and receiving input of placement data regarding the selected machined portion model, and
said model manager responds to data input through said user interface by updating said blank material model or the product model, which is the object to be machined, to a product model in a state wherein the machining operation corresponding to the selected machined portion model has been applied, based on said placement data.

3. The design support apparatus according to claim 1 or 2, wherein said shape data regarding said blank material model and said machined portion models are represented as 3-D solid models, and the shape of said product model is generated by a set operation of the solid models of said blank material model and one or more selected machined portion models.

4. The design support apparatus according to any one of claims 1 to 3, wherein each of said machined portion models further includes a wire model of a characteristic cross-sectional profile of the shape data of the associated machined portion.

5. The design support apparatus according to any one of claims 1 to 3, wherein each of said machined portion models further includes a wire model data defining a surface formed at the completion of machining operation applied to the associated machined portion.

6. The design support apparatus according to any one of claims 1 to 5, wherein each of said machined portion models further includes design requirement data regarding the associated machined portion.

7. The design support apparatus according to any one of claims 1 to 6, wherein said design support apparatus further comprises machining attribute provision means for providing a user with machining attribute data regarding each of the machined portion models contained in said product model.

8. The design support apparatus according to any one of claims 1 to 7, wherein each of said machined portion models is configured by combining one or more unit process models, each indicating a unit machined portion machined by a single tool.

9. The design support apparatus according to claim 8, wherein each of said unit process models includes shape data and machining attribute data regarding said unit machined portion.

10. The design support apparatus according to claim 8 or 9, wherein the design support apparatus further comprises means for classifying the unit process models contained in said product model based on a tool used for machining and a machining direction to obtain the machining sequence of the unit process models based on the classified result.

11. A design support apparatus comprising:
a tool library in which drilling tools are registered with attribute data thereof including shape data regarding the drilling tools;
a user interface for receiving designation of selecting drilling tools from said tool library and input of data regarding the machining direction and machining depth processed by the selected drilling tool, and
a modeler which generates a model representing the shape drilled by the selected drilling tool according to data input through said input means and shape data of the selected drilling tool.

12. The design support apparatus according to claim 11, wherein the design support apparatus further comprises a drilled portion model generator which produces drilled portion models, each indicating a single drilled portion by combining a plurality of models created by said modeler according to the order in which the input into said input means is performed.

13. The design support apparatus according to claim 11 or 12, wherein the design support apparatus further comprises guide display means which receives input of data regarding a cross-sectional profile of the drilled portion and displays the input cross-sectional profile as a guide line.

14. The design support apparatus according to claim 13, wherein the design support apparatus further comprises a checker for checking whether or not the generated drilled portion models are consistent with said cross-sectional profile, and then providing the checked result.

15. The design support apparatus according to claim 11, wherein the design support apparatus further comprises means for incorporating the predetermined attribute data registered in said tool library and associated with the drilling tool selected by said input means into the machining attribute data regarding the model generated by said modeler.

16. A design support apparatus comprising:
a tool database in which attribute data regarding plane machining tool is registered;
means for receiving input of data of a guide line defining a plane position at the completion of machining;
input means for inputting designation of selecting a plane machining tool from said tool database and specifying a machining depth processed by the selected plane machining tool as an offset amount relative to said guide line;
a model generator for producing unit process models, each representing a machining geometry formed by said plane machining tool, according to data input through said input means, and
a plane machined portion model generator for producing plane machined portion models, each defining a plane machined portion by combining a plurality of the unit process models generated by said model generator according to the order in which the processes corresponding to the data input through said input means are performed.

17. A design support method for assisting design of product shape and machining process using a computer system comprising steps of:
providing a user with a model representing an object to be machined;
receiving a designation of selection of a machined portion model representing a machining operation to be applied to the object to be machined from a machined portion library in which machined portion models, each including shape data and machining attribute data regarding the associated machined portion are registered;
receiving input placement data concerning the placing of the selected machined portion model on said object to be machined, and
generating a model representing said object to be machined in a state wherein a machining operation corresponding to the selected machined portion model has been applied, based on the selected machined portion model and the placement data thereof, and the model of said object to be machined.

18. A program for forcing a computer system to execute the steps of:
providing a user with a model representing an object to be machined;
receiving a designation of a selection of a machined portion model representing machining operation to be applied to the object to be machined from a machined portion library in which are stored machined portion models, each including shape data and machining attribute data regarding a machined portion, which have been registered by a user;
receiving input of placement data for placing the selected machined portion model on said object to be machined from a user;
generating a model representing said object to be machined in a state wherein a machining operation corresponding to the machined portion model has been applied, based on said selected machined portion model and the placement data thereof, and on said object to be machined.
